# EUROPEAN PATENT APPLICATION

(11) **EP 3 086 306 A1**
(43) Date of publication of application: **26.10.2016**
(21) Application number: 14872588.0
(22) Date of filing: 01.12.2014
(51) Int. Cl.: G09F 9/00, H05K 5/02

(54) **ELECTRONIC DEVICE AND TRANSLUCENT COVER SUBSTRATE**

(30) Priority: 21.12.2013 JP 2013264698
(71) Applicant: Kyocera Corporation, Kyoto-shi, Kyoto-fu 612-8501 (JP)
(72) Inventor: UTO, Takashi, Kyoto-shi Kyoto 612-8501 (JP); MITSUDA, Kuniaki, Kyoto-shi Kyoto 612-8501 (JP)
(74) Representative: Viering, Jentschura & Partner mbB Patent- und Rechtsanwälte
(86) International application number: PCT/JP2014/081733
(87) International publication number: WO 2015/093269

(57) **Abstract**

There is provided an electronic apparatus including an image display device that includes an image display surface; a casing that houses at least a portion of periphery of the image display device; a light-transmissive cover plate that includes a first surface facing the image display surface, at least a peripheral edge of the first surface is bonded to the casing; and a joining member that bonds the peripheral edge of the first surface to the casing and has a Young's modulus smaller than that of the light-transmissive cover plate, in which the light-transmissive cover plate includes a gradual reduction area whose thickness is gradually reduced toward a most peripheral edge and at least a portion of the peripheral edge of the first surface is included in the gradual reduction area.

## Description

### Technical Field

The present invention relates to an electronic apparatus and a light-transmissive cover plate.

### Background Art

In the related art, an electronic apparatus such as a digital camera or a mobile phone in which an image display device such as a liquid crystal panel or an organic EL panel is builted-in is used. Recently, a portable electronic apparatus such as a smart phone terminal or a tablet terminal which displays a relatively large image and includes an input device such as a touch panel has begun to rapidly spread. For example, PTL1 discloses a technique related to such a smart phone. In the portable electronic apparatus, a light-transmissive cover plate for protecting an builted-in image display surface of the image display device such as the liquid crystal panel or the organic EL panel is arranged to form a portion of a housing of the electronic apparatus. Strengthened glass made of aluminosilicate glass or the like is mainly used as the light-transmissive cover plate for protecting particularly the image display surface of the image display device in the light-transmissive cover plate.

### Citation List

### Patent Literature

PTL 1: Japanese Unexamined Patent Application Publication No. 2011-61316

### Summary of Invention

### Technical Problem

Although the strengthened glass is stronger than the ordinary glass, when a strong impact applied thereto, for example, in a case where an electronic apparatus is dropped, breakage or cracks of the light-transmissive cover plate made of a strengthened glass, may often be caused due to the impact. The present invention has been made in light of the above-described problem.

### Solution to Problem

The present invention provides an electronic apparatus including an image display device that includes an image display surface; a casing that houses at least a portion of periphery of the image display device; a light-transmissive cover plate that includes a first surface facing the image display surface, at least a peripheral edge of the first surface is bonded to the casing; and a joining member that bonds the peripheral edge of the first surface to the casing and has a Young's modulus smaller than that of the light-transmissive cover plate, in which the light-transmissive cover plate includes a gradual reduction area whose thickness is gradually reduced toward a most peripheral edge and at least a portion of the peripheral edge of the first surface is included in the gradual reduction area.

Wherein an embodiment of an electronic apparatus, the light-transmissive cover plate includes a gradual reduction area whose thickness is gradually reduced toward a most peripheral edge in an area which includes at least the peripheral edge of the first surface.

### Advantageous Effects of Invention

According to the present invention, cracks and breakage of the light-transmissive cover plate which are caused when an impact is applied to an electronic apparatus can be suppressed.

### BRIEF DESCRIPTION OF THE DRAWINGS

Fig. 1 is a front view schematically describing an embodiment of an electronic apparatus;
Fig. 2 is a rear view illustrating the external appearance of the electronic apparatus;
Fig. 3 is an enlarged cross-sectional view of the electronic apparatus;
Figs. 4A and 4B are views illustrating an embodiment of a light-transmissive cover plate of which is included in the electronic apparatus, and Fig. 4A is a schematic perspective view and Fig. 4B is an enlarged cross-sectional view;
Fig. 5 is an enlarged cross-sectional view illustrating an example of the electronic apparatus in the related art;
Fig. 6 illustrates measurement results of a surface shape in the vicinity of a peripheral edge of a light-transmissive cover plate;
Fig. 7 is an enlarged cross-sectional view illustrating another embodiment of the electronic apparatus;
Figs. 8A and 8B are enlarged cross-sectional views respectively illustrating another embodiment of a light-transmissive cover plate;
Fig. 9 is a block diagram illustrating an electric configuration of the electronic apparatus;
Fig. 10 is a plan view illustrating a piezoelectric vibrating element;
Fig. 11 is a side view illustrating the piezoelectric vibrating element;
Fig. 12 is a side view illustrating a state of the piezoelectric vibrating element being bent;
Fig. 13 is a side view illustrating a state of the piezoelectric vibrating element being bent;
Fig. 14 is a plan view illustrating the light-transmissive cover plate; and
Fig. 15 is a view for describing an air conduction sound and a conduction sound.

### DESCRIPTION OF EMBODIMENTS

Hereinafter, an embodiment of the present invention will be described with reference to the accompanying drawings.

### <External appearance of electronic apparatus>

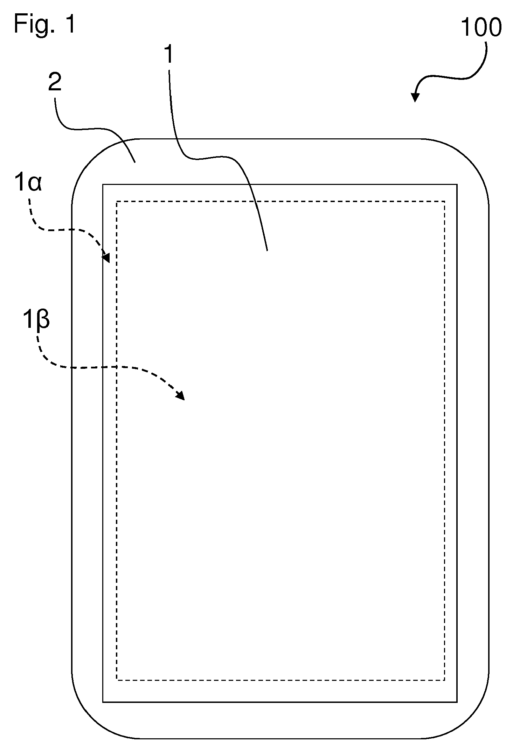

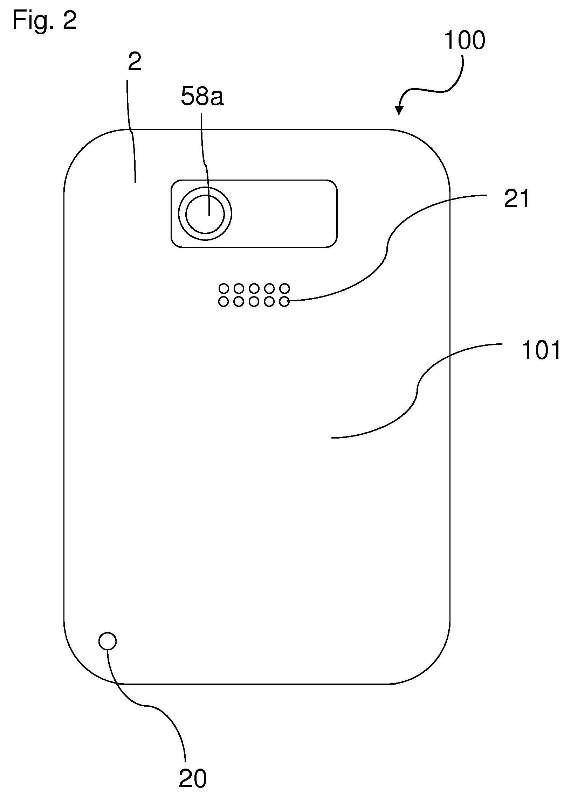

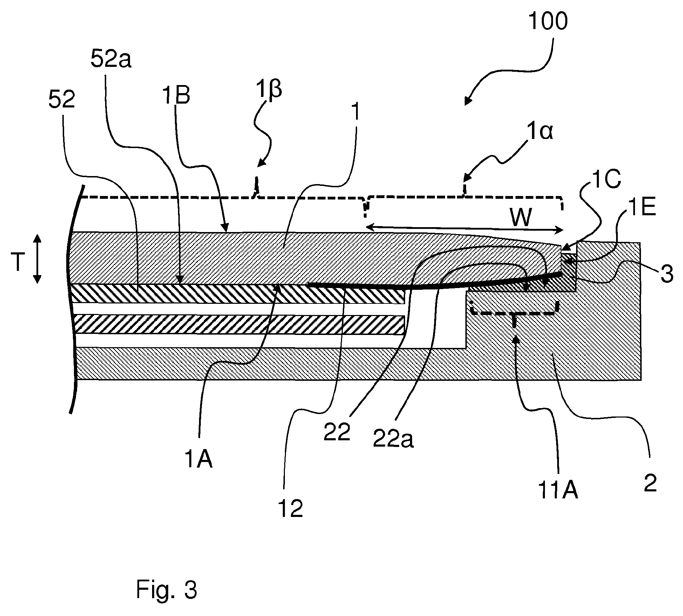

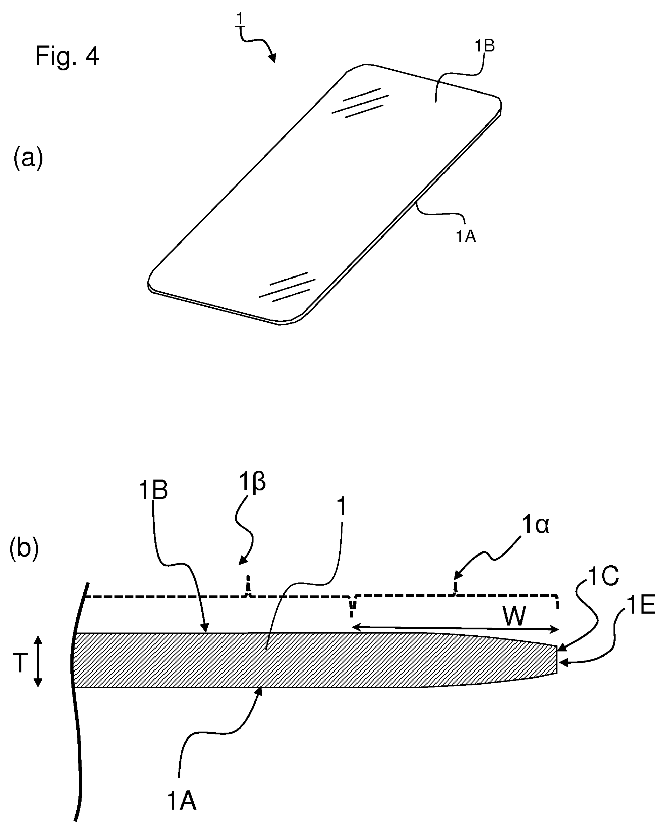

Fig. 1 is a front view schematically describing an electronic apparatus 100 which is an embodiment of the electronic apparatus, Fig. 2 is a rear view illustrating the electronic apparatus 100, and Fig. 3 is an enlarged cross-sectional view of a portion of the electronic apparatus 100. Figs. 4A and 4B are views illustrating a light-transmissive cover plate 1 which is an embodiment of the light-transmissive cover plate embedded in the electronic apparatus 100, and Fig. 4A is a schematic perspective view, and Fig. 4B is an enlarged cross-sectional view of a portion of the light-transmissive cover plate 1.

### <External appearance of electronic apparatus>

The electronic apparatus 100 illustrated in Figs. 1 to 4 according to the present embodiment is a portable electronic terminal having a communication function which is referred to as a smart phone.

As illustrated in Fig. 3, the electronic apparatus 100 includes an image display device 52 with an image display surface 52a, a casing 2 housing at least a portion of periphery of the image display device 52, a light-transmissive cover plate 1 which includes a first surface 1A facing the image display surface 52a and a second surface 1B facing the first surface 1A and in which at least a peripheral edge 11A of the first surface 1A is bonded to the casing 2, and a joining member 3 which bonds the peripheral edge 11A of the first surface 1A to the casing 2 and has a Young's modulus smaller than that of the light-transmissive cover plate 1. The light-transmissive cover plate 1 includes a gradual reduction area 1α whose thickness is gradually reduced toward a most peripheral edge 1E and at least a portion of the peripheral edge 11A is included in the gradual reduction area 1α. The gradual reduction area 1α whose thickness is gradually reduced with the peripheral edge 11A of the first surface 1A is gradually closed to the second surface 1B of the light-transmissive cover plate 1 toward to the most peripheral edge 1E. For example, a width W of the gradual reduction area is preferably 0.1 mm to 5 mm. The most peripheral edge 1E is a portion corresponding to the outermost peripheral line of the light-transmissive cover plate 1 when seen in a direction perpendicular to the first surface 1A in a plan view. The light-transmissive cover plate 1 of the present embodiment has a planar side surface 1C and the most peripheral edge 1E includes the side surface 1C. It is preferable that a thickness of the most peripheral edge 1E is smaller than a thickness of a central area 1*β* and difference between these thickness is about 0.001 mm to 1 mm. In addition, the joining member 3 is arranged such that the joining member continuously surrounds the peripheral edge 11A of the first surface 1A to the side surface 1C as the most peripheral edge 1E, and the side surface 1C is bonded to the casing 2 through the joining member 3. A housing structure configured of the casing 2 and the light-transmissive cover plate 1 is formed by bonding the light-transmissive cover plate 1 to the casing 2.

The light-transmissive cover plate 1 has transparency and mainly includes a single crystal body having alumina (Al₂O₃) as a main component. A single crystal of alumina (Al₂O₃) as a main component is generally referred to as sapphire, is hardly damaged and broken compared to strengthened glass or the like. The transparent single crystal has high thermal conductivity and high heat dissipation. Further, since the Young's modulus is in the range of 380 GPa to 240 GPa, which is considerably very high, the transparent single crystal is hardly deformed. It is not limited the light-transmissive cover plate 1 is a single crystal body containing alumina (Al₂O₃) as a main component. The light-transmissive cover plate 1 may be made of glass, an acrylic resin, or the like, but it is preferable that the light-transmissive cover plate 1 be made of a single crystal body containing alumina (Al₂O₃) as a main component from a view point of the single crystal body being hardly damaged and hardly broken. Furthermore, in the present specification, the term "transparency" is a property in which a transmittance with respect to visible light is 50% or more. The thickness of the central area 1*β* of the light-transmissive cover plate 1 of the present embodiment is, for example, approximately 4 mm.

Moreover, the gradual reduction area 1α of the first surface 1A of the light-transmissive cover plate 1 has an arithmetic average roughness (Ra) greater than an arithmetic average roughness (Ra) of a central area 1β that is positioned closer to the central side of the first surface 1A than the gradual reduction area 1α. For example, while the arithmetic average roughness (Ra) in the central area 1β on the first surface 1A is approximately 0.05 nm to 0.08 nm, the arithmetic average roughness (Ra) in the area corresponding to the gradual reduction area 1α on the first surface 1A is approximately 0.1 nm to 0.2 nm, which is relatively greater than that of the central area 1β. In the present specification, the arithmetic average roughness (Ra) may be measured using, for example, an atomic force microscope described below.

In the present embodiment, the casing 2 includes a polycarbonate resin as a main component. Examples of the main component of the casing 2, which are not particularly limited as long as materials are normally used by a person skilled in the art, include resin materials such as a polycarbonate resin, an ABS resin, and a nylon-based resin, and a metal such like magnesium for example, and a material which is the same as that of the light-transmissive cover plate. The casing 2 may be configured of only a member or a combination of a plurality of members.

The image display device 52 is a liquid crystal display panel, and has a backlight unit and a liquid crystal layer which are not illustrated in the drawings. Image information displayed on the image display surface 52a of the image display device 52 is formed by white light, which is emitted from an LED lamp of the backlight unit, being partially colored by passing through the liquid crystal layer included in the image display device 52. That is, while the white light emitted from the LED lamp passes through the liquid crystal layer, the color of the transmitted light is changed by limiting a wavelength band of the light being transmitted for each portion and the image information indicating characters having various colors and shapes, symbols, and drawings is formed on the image display surface 52a. The light indicating the image information formed on the image display surface 52a in this manner is incident from the first surface 1A of the light-transmissive cover plate 1, emits from a second surface 1B, and enters eyes of an operator (user) of the electronic apparatus 100, and the operator recognizes the characters, the symbols, and the drawings indicated by the image information.

For example, a light shielding film layer 12 is provided in a partial area including the peripheral edge 11A of the first surface 1A of the light-transmissive cover plate 1, and the portion corresponding to the light shielding film layer 12 is a non-display portion in which the information is not displayed. For example, the light shielding film layer 12 can be made by screen printing as printing shielding material such like organic ink to the peripheral edge 11A of the first surface 1A selectively. A thickness the light shielding film layer 12 of this embodiment is about 0.01 um to 10 um. A touch panel 53 is attached to the first surface 1A of the light-transmissive cover plate 1, the user can give various instructions with respect to the electronic apparatus 100 by touching an area corresponding to a display portion of the second surface 1B of the light-transmissive cover plate 1 with a finger or the like.

A speaker hole 21 and a microphone hole 20 are formed on a back surface 101 of the electronic apparatus 100, that is, the back surface 101 of the casing 2. Further, an imaging lens 58a including an imaging unit 58 described below is exposed from the back surface 101 of the electronic apparatus 100 through window member for lens cover.

As illustrated in Fig. 3, the casing 2 of the electronic apparatus 100 includes a step portion 22 in a portion bonded to the light-transmissive cover plate 1, and the first surface 1A is bonded to a step surface 22a of the step portion 22 through the joining member 3 in the light-transmissive cover plate 1. The peripheral edge 11A of the first surface 1A is an area in contact with the joining member 3 as described above.

The joining member 3 is formed by an adhesive being cured. A liquid resin (adhesive) having high viscosity including, for example, an epoxy resin and an acrylic resin as main components is cured by, for example, heat or ultraviolet rays to form the joining member 3. The Young's modulus of the joining member 3 is approximately less than 0.1 GPa, and is remarkably smaller than that of the single crystal body (hereinafter, simply referred to as sapphire) containing alumina (Al₂O₃) as a main component.

Since the joining member 3 has a Young's modulus smaller than that of the light-transmissive cover plate 1, for example, when an external force in a direction toward the central side in the light-transmissive cover plate 1 through the casing 2 and the joining member 3 is applied from the outer surface of the casing 2 to the light-transmissive cover plate 1, the joining member 3 is deformed so as to absorb the external force (the energy of the external force is mainly used for the deformation of the joining member 3) and thus the external force applied to the light-transmissive cover plate 1 is relatively weakened. For example, in cases where the electronic apparatus 100 is dropped or an impact, the joining member 3 is applied to the light-transmissive cover plate 1 because of the side surface or a corner of the casing 2 colliding with the ground, the joining member 3 is deformed so that the impact (external force) applied thereto is reduced.

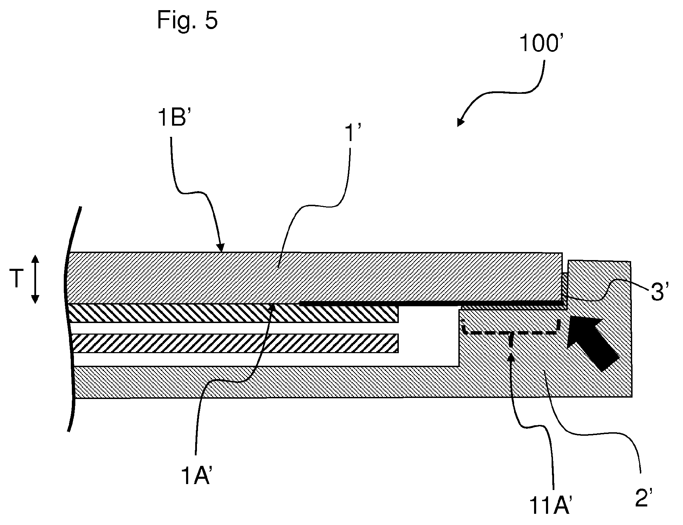

Fig. 5 is an enlarged cross-sectional view of an electronic apparatus 100' as an example of the electronic apparatus in the related art for comparison with the present embodiment. In the electronic apparatus 100' in the related art, the width (thickness) between a first surface 1A' and a second surface 1B' of the light-transmissive cover plate 1' is constant throughout the entire area including a peripheral edge 11A' of the first surface 1A', and the thickness of an area corresponding to the peripheral edge 11A' in a joining member 3' is relatively still small. Consequently, in a case where an impact (external force) indicated by an arrow in Fig. 5 is applied to the outside the casing 2', the impact (external force) is not sufficiently absorbed by deformation of the joining member 3', so that the relatively large impact (external force) is applied to the light-transmissive cover plate 1 and thus cracks or breakage are relatively easily caused in the light-transmissive cover plate 1'.

On the other hand, in the present embodiment, the light-transmissive cover plate 1 includes the gradual reduction area 1α whose thickness is reduced toward the most peripheral edge 1E and the peripheral edge 1A of the first surface 1A is included in the gradual reduction area 1α. In the electronic apparatus 100, the thickness of the joining member 3 in a portion corresponding to the peripheral edge 11A of the first surface 1A becomes large by the gradual reduction area 1α being provided. In this manner, even in the case where the electronic apparatus 100 is dropped as described above, the joining member 3 further efficiently absorbs the impact (external force) in the portion corresponding to the peripheral edge 11A, so the impact (external force) applied to the light-transmissive cover plate 1 can be suppressed. Accordingly, in the electronic apparatus 100, cracks or breakage are relatively unlikely caused in the light-transmissive cover plate 1. In the present embodiment, the width W of the gradual reduction area 1α is, for example, approximately 0.1 mm to 1 mm and a thickness of the most peripheral edge 1E is smaller than a thickness of a central area 1*β* and difference between these thickness is about 0.01 mm.

Moreover, in the first surface 1A of the light-transmissive cover plate 1, the arithmetic average roughness (Ra) of the gradual reduction area 1α is greater than the arithmetic average roughness (Ra) of the central area 1β positioned closer to the first surface 1A than the central side of the gradual reduction area 1α. Accordingly, the surface area of the gradual reduction area 1α is relatively large due to the fine unevenness. In the gradual reduction area 1α, the light shielding film layer 12 is provided, and the light shielding film layer 12 erodes the fine unevenness of the surface so that a so-called anchor effect is generated. Therefore, the bonding strength between the light shielding film layer 12 and the light-transmissive cover plate 1. In the gradual reduction area 1α, the fine unevenness corresponding to the fine unevenness of the first surface 1A is formed in the surface of the light shielding film layer 12. The joining member 3 erodes the fine unevenness of the surface of the light shielding film layer 12, so that a so-called anchor effect is generated. Therefore, the bonding strength between (the first surface 1A of) the light-transmissive cover plate 1, which is provided with the light shielding film layer 12, and the joining member 3 is relatively great and the light-transmissive cover plate 1 is hardly shifted from the casing 2. Although in this embodiment, the light shielding film layer 12 is provided on the first surface 1A of the light-transmissive cover plate 1, the light shielding film layer 12 may be provided on the second surface 1B of the light-transmissive cover plate 1. In this case as well, the joining member 3 directly erodes the fine unevenness of the gradual reduction area 1α of the first surface 1A of the light-transmissive cover plate 1, so that a so-called anchor effect is generated. Therefore, the bonding strength between (the first surface 1A of) the light-transmissive cover plate 1 and the joining member 3 is relatively great.

On the other hand, since a large part of the central area 1β corresponds to a display unit which is formed on the image display surface 52a and through which the light indicating the image information such as characters, symbols, drawings, and the like passes, surface roughness such as arithmetic average roughness is necessary to be decreased with high precision in many cases for suppressing scattering of the light indicating the image information. In the light-transmissive cover plate 1, the bonding strength with the joining member 3 is relatively high by allowing the arithmetic average roughness (Ra) of the central area 1β to be approximately 0.05 nm to 0.08 nm, which is extremely small, and by allowing the arithmetic average roughness (Ra) of the area corresponding to the gradual reduction area 1α to be approximately 0.1 nm to 0.2 nm, which is relatively large when compared to that of the central area 1β.

The gradual reduction area 1α of the light-transmissive cover plate 1 may be produced by polishing a part of the surface by mechanical processing. In regard to a substrate made of a material having relatively high hardness such as sapphire as a main component, a gradual reduction area can be formed by setting the pressing pressure (polishing pressure) of a polishing pad to be relatively high and polishing the surface of the substrate in a polishing process of polishing the surface of the substrate using, for example, a polishing pad or the like. In the process of polishing the surface by pressing the polishing pad to the surface of the substrate, particularly in a case where the polishing pressure is set to be relatively high, there is a tendency that the polishing pressure applied to the peripheral edge of the substrate becomes greater than the polishing pressure applied to the central portion, and a gradual reduction area whose thickness is reduced toward the most peripheral edge can be formed in the peripheral edge of the substrate using this tendency.

Hereinafter, an example of a production process of the light-transmissive cover plate 1 using sapphire as a main component will be described. For example, in a case where the light-transmissive cover plate is a substrate using sapphire as a main component, first, polishing is performed on the first surface 1A. In a first polishing, a copper plate is used as the polishing pad and mechanical polishing using diamond abrasive grains having a grain diameter of approximately 1 µm to 3 µm as abrasive grains for polishing is performed. At this time, the pressing pressure (polishing pressure) of the polishing pad is set to be 100 g/cm² to 500 g/cm², which is relatively high, and the polishing pad is allowed to rotate at a rotation speed of 30 rpm to 100 rpm. After the first polishing, chemical mechanical polishing (CMP) using colloidal silica abrasive grains having a grain diameter of approximately 20 µm to 80 µm as abrasive grains for polishing is performed. In this chemical mechanical polishing, the pressing pressure (polishing pressure) of the polishing pad is set to be 100 g/cm² to 500 g/cm², which is relatively high and the polishing pad is allowed to rotate at a rotation speed of 30 rpm to 100 rpm. The gradual reduction area 1α can be formed by performing the first polishing and the second polishing on the second surface 1B. Since sapphire is extremely hard and the surface roughness can be largely reduced by performing polishing with a relatively strong pressure, the gradual reduction area can be formed and the surface thereof can be planarized with high precision by performing polishing with a relatively strong polishing pressure.

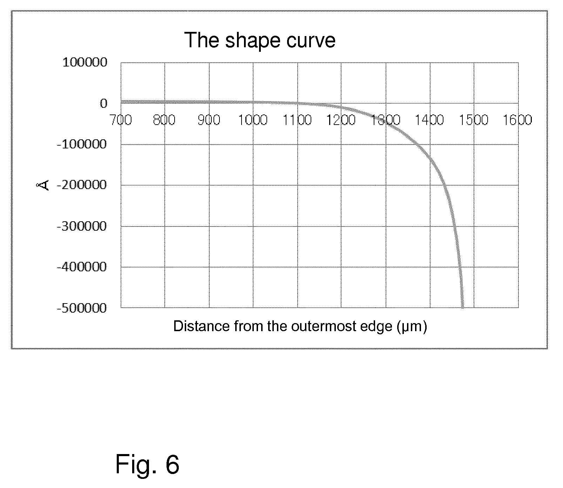

Fig. 6 illustrates measurement results of a surface shape in the vicinity area including the peripheral edge 11A of the light-transmissive cover plate 1 formed through the polishing process, a shape curve obtained by measurement using a surface step meter, and a surface profile obtained by measurement on an area including the most peripheral edge 1E over the range which is separated by 1.5 mm toward a side close to the center in the light-transmissive cover plate 1. Measurement is performed on a shaped cross section scanned at 150 µm/sec using a contact needle having a tip diameter φ of 12.5 µm. In the example of Fig. 6, the width W of the gradual reduction area 1α is approximately 0.35 mm and the thickness of the peripheral edge of the first surface 1α is smaller than that of the central portion by approximately 0.01 mm to 0.05 mm. Further, in the example illustrated in Fig. 6, when the surface roughness is measured using an atomic force microscope (AFM, manufactured by Digital Instruments, Inc.), the arithmetic average roughness (Ra) of the central area 1β of the first surface 1A is approximately 0.05 nm to 0.08 nm, whereas the arithmetic average roughness (Ra) of the area corresponding to the gradual reduction area 1α of the first surface 1A is approximately 0.1 nm to 0.2 nm, which is relatively large.

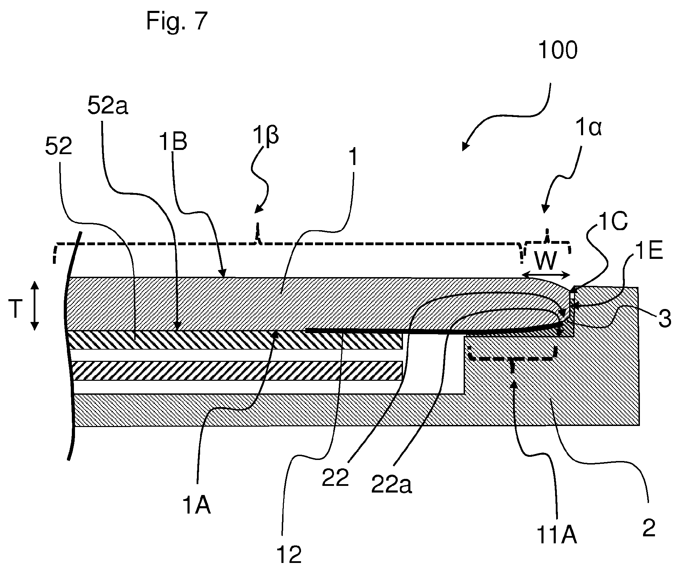

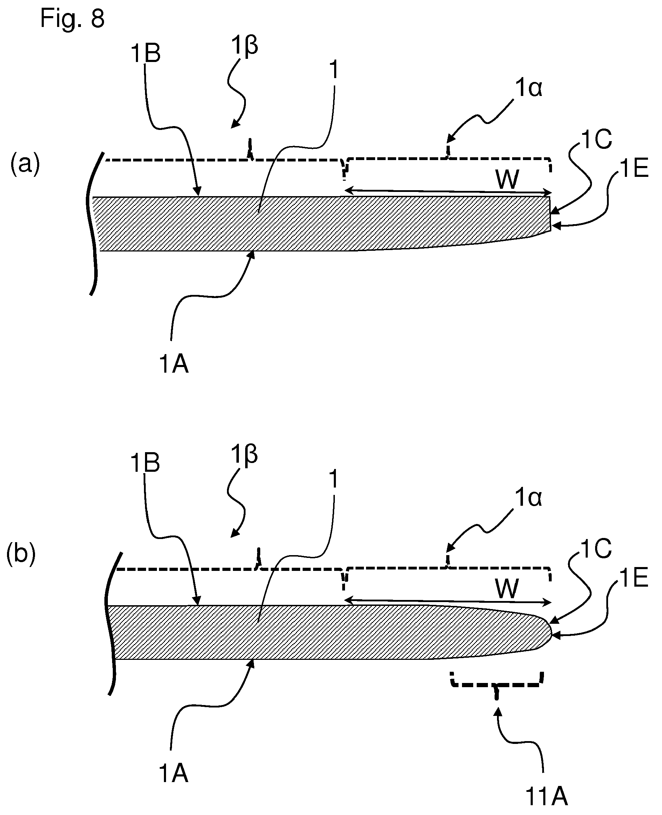

Fig. 7 is an enlarged cross-sectional view illustrating another embodiment of an electronic apparatus. In Fig. 7, the same configurations as those of the embodiment illustrated in Fig. 1 are denoted by the same reference numerals of Fig. 1. In the embodiment illustrated in Fig. 1, the entire peripheral edge 11A of the first surface 1A is included in the gradual reduction area 1α, but only a portion of the peripheral edge 11A of the first surface 1A may be included in the gradual reduction area 1α as illustrated in Fig. 7. That is, as illustrated in Fig. 7, the gradual reduction area 1α may be smaller than that of the peripheral edge 11A. Further, Figs. 8A and 8B are enlarged cross-sectional views illustrating another embodiment of the light-transmissive cover plate 1. In Figs. 8A and 8B, the same configurations as those of the embodiment illustrated in Figs. 4A and 4B are denoted by the same reference numerals of Figs. 4A and 4B. In the light-transmissive cover plate 1, the gradual reduction area 1α may be formed by making only the first surface 1A side into a curved surface as illustrated in Fig. 8A. In the light-transmissive cover plate 1, the gradual reduction area 1α may be composed by making at least one of the first surface 1A and the second surface 1B into an inclined plane surface. Further, as illustrated in Fig. 8B, the entire vicinity area of the peripheral edge 11A may have a curved surface shape without including the planar side surface 1C for the thickness of the most peripheral edge is zero.

### <Electric configuration of electronic apparatus>

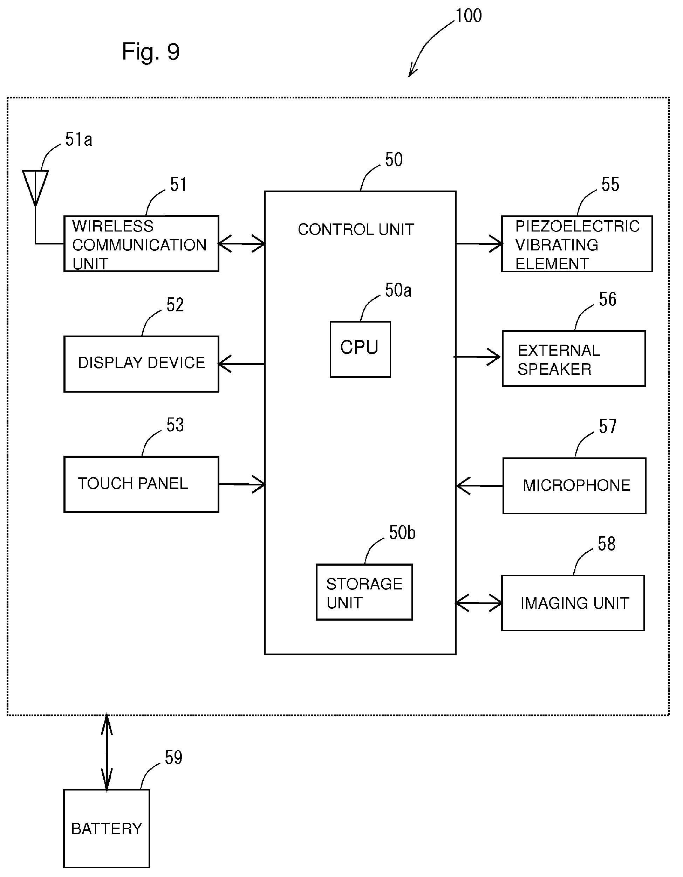

Fig. 9 is a block diagram illustrating an electric configuration of an electronic apparatus 100. As illustrated in Fig. 9, the electronic apparatus 100 includes a control unit 50, a wireless communication unit 51, an image display device 52, a touch panel 53, an operation unit 54, a piezoelectric vibrating element 55, an external speaker 56, a microphone 57, an imaging unit 58, and a battery 59, and these constituent elements are arranged in a housing structure configured by bonding the light-transmissive cover plate 1 and the casing 2.

The control unit 50 includes a CPU 50a and a storage unit 50b and manages overall operations of the electronic apparatus 100 by controlling other configuration elements of the electronic apparatus 100. The storage unit 50b is configured of a ROM and a RAM. Various functional blocks are formed in the control unit 50 by the CPU 50a executing various programs in the storage unit 50b.

The wireless communication unit 51 receives a signal from a communication device such as a web server connected to the Internet or a mobile phone different from the electronic apparatus 100 using an antenna 51a via a base station. The wireless communication unit 51 performs an amplification process and down conversion on the received signal and outputs the signal to the control unit 50. The control unit 50 performs demodulation processing or the like on the input received signal and acquires a sound signal indicating a voice or music included in the received signal. Further, the wireless communication unit 51 performs up-converting and the amplification process on a transmission signal including a sound signal or the like generated in the control unit 50, and transmits the transmission signal after the process from the antenna 51a in a wireless manner. The transmission signal from the antenna 51a is received in a communication device connected to the Internet or a mobile phone different from the electronic apparatus 100 via the base station.

The image display device 52 is, for example, a liquid crystal image display device as described above and displays various pieces of information such as characters, signals, and drawings on the image display surface 52a by being controlled by the control unit 50. The light indicting image information displayed in the image display device 52 passes through the light-transmissive cover plate 1 and enters eyes of a user (operator) of the electronic apparatus 100, and accordingly the information can be recognized by the user of the electronic apparatus 100.

The touch panel 53 is, for example, a projection type electrostatic capacitance touch panel and detects an operation of the user with respect to the second surface 1B of the light-transmissive cover plate 1. The touch panel 53 is attached to the first surface 1A side in the light-transmissive cover plate 1 and includes two sheets each having a sensing electrode pattern which are arranged so as to face each other. Two sheets of sensing electrode pattern are bonded to each other using a transparent adhesive sheet.

A plurality of long and narrow X electrodes that extend along an X-axis direction (for example, a lateral direction of the electronic apparatus 100) and are arranged in parallel with each other are formed on one sensing electrode pattern sheet. A plurality of long and narrow Y electrodes which respectively extend along a Y-axis direction (for example, a vertical direction of the electronic apparatus 100) and are arranged in parallel with each other are formed in the other sensing electrode pattern sheet. When a finger of the user is touched on the second surface 1B of the light-transmissive cover plate 1, the electrostatic capacitance between an X electrode and a Y electrode positioned below the touched portion is changed so that the operation on the second surface 1B of the light-transmissive cover plate 1 in the touch panel 53 is detected. The change in the electrostatic capacitance between the X electrode and the Y electrode, which is generated in the touch panel 53, is transmitted to the control unit 50, and the control unit 50 specifies the content of the operation performed on the second surface 1B of the light-transmissive cover plate 1 based on the change in the electrostatic capacitance and performs an operation according to the specified contents.

The piezoelectric vibrating element 55 is an element for transmitting a reception sound to the user of the electronic apparatus 100. The piezoelectric vibrating element 55 is vibrated by a driving voltage applied from the control unit 50. The control unit 50 generates a driving voltage based on a sound signal indicating the reception sound and applies the driving voltage to the piezoelectric vibrating element 55. The piezoelectric vibrating element 55 is vibrated by the control unit 50 based on the sound signal indicating the reception sound and thus the reception sound is transmitted to the user of the electronic apparatus 100. In this manner, the control unit 50 functions as a driving unit allowing the piezoelectric vibrating element 55 to vibrate based on the sound signal. The piezoelectric vibrating element 55 will be described below in detail.

The external speaker 56 outputs the electric sound signal from the control unit 50 by converting the signal into a sound. The sound output from the external speaker 56 is output to the outside from speaker holes 20 provided on the back surface 101 of the electronic apparatus 100.

The microphone 57 outputs the sound input from the outside of the electronic apparatus 100 to the control unit 50 by converting the electric sound signal into a sound. The sound from the outside of the electronic apparatus 100 is incorporated in the electronic apparatus 100 from microphone holes 21 provided on the back surface 101 of the electronic apparatus 100 and is input to the microphone 57.

The imaging unit 58 is configured of the imaging lens 58a, an imaging element, and the like, and images a still image and a moving image based on the control by the control unit 50.

The battery 59 outputs a power source of the electronic apparatus 100. The power source output from the battery 59 is supplied with respect to respective electronic components contained in the control unit 50 or the wireless communication unit 51 included in the electronic apparatus 100.

### <Details of piezoelectric vibrating element>

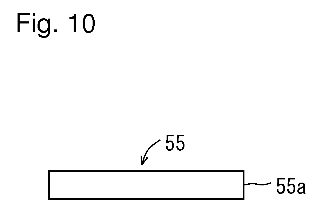

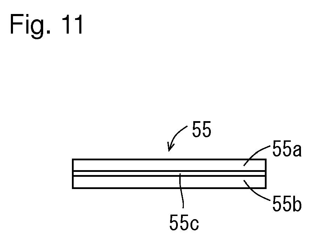

Figs. 10 and 11 are respectively a top view and a side view illustrating a structure of the piezoelectric vibrating element 55. As illustrated in Figs. 10 and 11, the piezoelectric vibrating element 55 has a long shape in one direction. Specifically, the piezoelectric vibrating element 55 has a long and narrow rectangular plate shape in a plan view. The piezoelectric vibrating element 55 has, for example, a bimorph structure and includes a first piezoelectric ceramic plate 55a and a second piezoelectric ceramic plate 55b which are attached to each other through a sim material 55c.

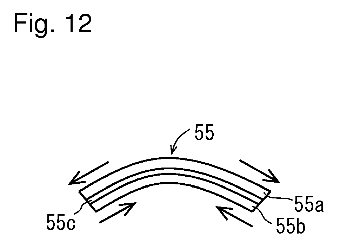

In the piezoelectric vibrating element 55, when a positive voltage is applied to the first piezoelectric ceramic plate 55a and a negative voltage is applied to the second piezoelectric ceramic plate 55b, the first piezoelectric ceramic plate 55a extends along the longitudinal direction and the second piezoelectric ceramic plate 55b contracts along the longitudinal direction. Accordingly, as illustrated in Fig. 12, the piezoelectric vibrating element 55 is bent into a convex shape with the first piezoelectric ceramic plate 55a being outside.

In contrast, in the piezoelectric vibrating element 55, when a negative voltage is applied to the first piezoelectric ceramic plate 55a and a positive voltage is applied to the second piezoelectric ceramic plate 55b, the first piezoelectric ceramic plate 55a contracts along the longitudinal direction and the second piezoelectric ceramic plate 55b extends along the longitudinal direction. Accordingly, as illustrated in Fig. 12, the piezoelectric vibrating element 55 is bent into a convex shape with the second piezoelectric ceramic plate 55b being outside.

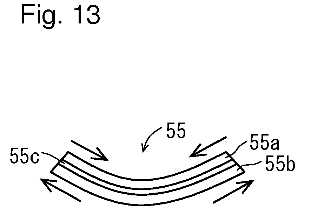

The piezoelectric vibrating element 55 is bent and vibrates by alternatively taking the state of Fig. 12 and the state of Fig. 13. The control unit 50 allows the piezoelectric vibrating element 55 to be bent and vibrate by applying an AC voltage in which the positive voltage and the negative voltage alternatively appear at an area between the first piezoelectric ceramic plate 55a and the second piezoelectric ceramic plate 55b.

In addition, only one structure made of the first piezoelectric ceramic plate 55a and the second piezoelectric ceramic plate 55b which are bonded to each other by interposing the sim material 55c therebetween is provided in the piezoelectric vibrating element 55 illustrated in Figs. 11 to 13, but a plurality of the structures may be laminated to each other.

### <Arrangement position of piezoelectric vibrating element>

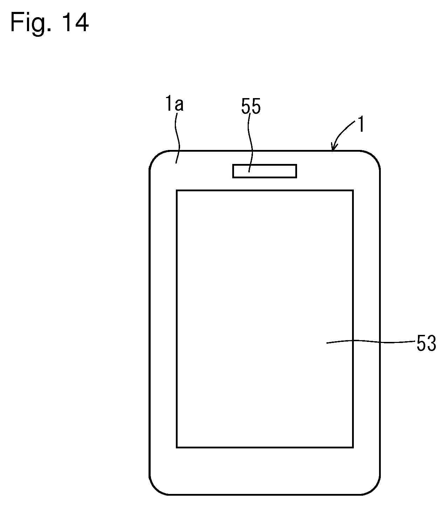

Fig. 14 is a plan view when the light-transmissive cover plate 1 is seen from the first surface 1A side. The piezoelectric vibrating element 55 is attached to the first surface 1A of the light-transmissive cover plate 1 using an adhesive such as a double-sided tape. The piezoelectric vibrating element 55 is arranged in a position which is not overlapped with the image display device 52 and the touch panel 53 when the light-transmissive cover plate 1 is seen from the first surface 1A side in a plan view in the first surface 1A of the light-transmissive cover plate 1.

### <Regarding generation of reception sound due to vibration of piezoelectric vibrating element>

In the present embodiment, an air conduction sound and a conduction sound are transmitted to the user from the light-transmissive cover plate 1 by the piezoelectric vibrating element 55 allowing the light-transmissive cover plate 1 to vibrate. That is, the vibration of the piezoelectric vibrating element 55 is transmitted to the light-transmissive cover plate 1 so that the air conduction sound and the conduction sound are transmitted to the user from the light-transmissive cover plate 1.

Here, the term "air conduction sound" means a sound recognized in a human brain by the vibration of an eardrum due to a sound wave (air vibration) which enters an external auditory meatus hole (a so-called "ear hole"). On the other hand, the term "conduction sound" is a sound recognized in a human brain by the vibration of the eardrum due to the vibration of an auricle transmitted to the eardrum after the auricle is vibrated. Hereinafter, the air conduction sound and the conduction sound will be described in detail.

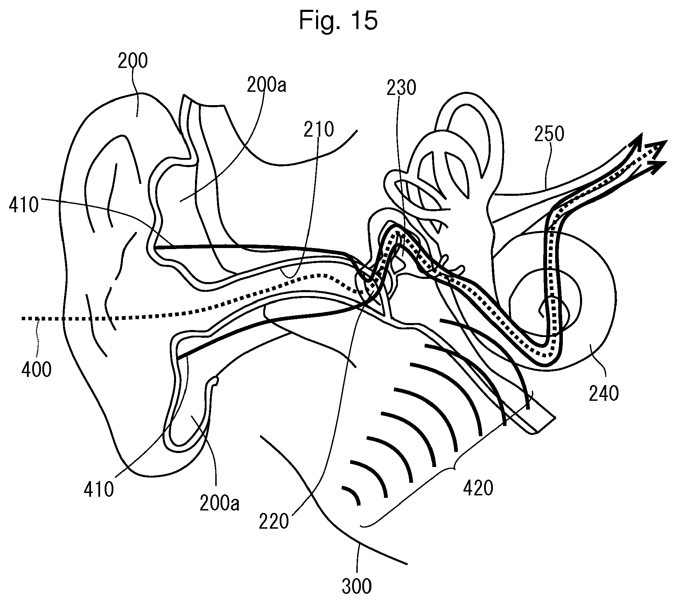

Fig. 15 is a view for describing the air conduction sound and the conduction sound. Fig. 15 illustrates a structure of an ear of the user of the electronic apparatus 100. In Fig. 15, a wavy line 400 indicates a conduction path of a sound signal (sound information) while the air conduction sound is recognized in the brain and a solid line 410 indicates the conduction path of the sound signal while the conduction sound is recognized in the brain.

When the piezoelectric vibrating element 55 mounted to the light-transmissive cover plate 1 vibrates based on the electric sound signal indicating the reception sound, the light-transmissive cover plate 1 vibrates and a sound wave is output from the light-transmissive cover plate 1. When the user moves the light-transmissive cover plate 1 of the electronic apparatus 100 close to an auricle 200 of the user by holding the electronic apparatus 100 in a hand or the light-transmissive cover plate 1 of the electronic apparatus 100 is set against the auricle 200 of the user, the sound wave output from the light-transmissive cover plate 1 enters an external auditory meatus hole 210. The sound wave from the light-transmissive cover plate 1 advances in the external auditory meatus hole 210 and allows the eardrum 220 to vibrate. The vibration of the eardrum 220 is transmitted to au auditory ossicle 230 and the auditory ossicle 230 vibrates. In addition, the vibration of the auditory ossicle 230 is transmitted to a cochlea 240 and is converted into an electrical signal in the cochlea 240. The electrical signal is transmitted to the brain by passing through an acoustic nerve 250 and the reception sound is recognized in the brain. In this manner, the air conduction sound is transmitted from the light-transmissive cover plate 1 to the user.

Further, when the user sets the light-transmissive cover plate 1 of the electronic apparatus 100 against the auricle 200 of the user by holding the electronic apparatus 100 in a hand, the auricle 200 is vibrated by the light-transmissive cover plate 1 which is vibrated by the piezoelectric vibrating element 55. The vibration of the auricle 200 is transmitted to the eardrum 220, and thus the eardrum 220 vibrates. The vibration of the eardrum 220 is transmitted to the auditory ossicle 230, and thus the auditory ossicle 230 vibrates. In addition, the vibration of the auditory ossicle 230 is transmitted to the cochlea 240 and is converted into an electrical signal in the cochlea 240. The electrical signal is transmitted to the brain by passing through the acoustic nerve 250 and the reception sound is recognized in the brain. In this manner, the conduction sound is transmitted from the light-transmissive cover plate 1 to the user. Fig. 15 illustrates an auricular cartilage 200a in the inside of the auricle 200.

In addition, the conduction sound herein is different from a bone conduction sound (also referred to as a "bone conduction sound"). The bone conduction sound is a sound recognized in a human brain by the vibration of the skull and direct stimulation of the inner ear such as the cochlea caused by the vibration of the skull. In Fig. 15, in a case of vibrating the jawbone 300, the transmission path of the sound signal while the bone conduction sound is recognized in the brain is indicated with a plurality of arcs 420.

In this manner, in the electronic apparatus 100 according to the present embodiment of the present invention, the air conduction sound and the conduction sound can be transmitted from the light-transmissive cover plate 1 to the user of the electronic apparatus 100 by allowing the light-transmissive cover plate 1 of the front surface to appropriately vibrates through the piezoelectric vibrating element 55. The structure of the piezoelectric vibrating element 55 according to the present embodiment is designed such that the air conduction sound and the conduction sound can be appropriately transmitted to the user. Various advantages are generated by constituting the electronic apparatus 100 such that the air conduction sound and the conduction sound can be transmitted to the user.

For example, since the user can hear a sound when the user sets the light-transmissive cover plate 1 against an ear, the communication using a telephone can be performed without concerning the position of the electronic apparatus 100 set against an ear so much.

In addition, in a case where there is a large amount of ambient noise, it is possible to increase the volume of the conduction sound and to make difficult for the ambient noise to be heard by the user by strongly pressing the ear against the light-transmissive cover plate 1. Accordingly, the user can appropriately perform communication using a telephone even when there is a large amount of the ambient noise.

In addition, even in a state in which earplugs or earphones are fixed to the ears of the user, the reception sound from the electronic apparatus 100 can be recognized by putting the light-transmissive cover plate 1 against the ear (more specifically the auricle). Further, even in the state in which headphones are fixed to the ears of the user, the reception sound from the electronic apparatus 100 can be recognized by setting the light-transmissive cover plate 1 against the headphones.

### <Regarding holes of ear piece (holes for receiver)>

In electronic apparatus such as a mobile phone, holes of the ear piece are made on the light-transmissive cover plate 1 of the front surface in some cases for extracting a sound output from a receiver (speaker for receiving a voice) provided in the inside of the electronic apparatus to the outside the electronic apparatus.

In the electronic apparatus 100 according to the present embodiment, since the reception sound is generated by the vibration of the light-transmissive cover plate 1, the reception sound can be appropriately transmitted to the user even through there are no holes in the ear piece of the electronic apparatus 100. The light-transmissive cover plate 1 is a single crystal body which contains alumina (Al₂O₃) as a main component, and extremely hard when compared to strengthened glass or the like. In addition, resistance to various chemicals is also significantly high. When the single crystal body which contains alumina (Al₂O₃) as a main component is processed to perform processing of opening holes of the ear piece, production cost becomes relatively high because an expensive production apparatus such as a laser processing apparatus becomes necessary or the time required for the processing becomes longer. Since the light-transmissive cover plate 1 of the present embodiment has no holes in the ear piece, the cost for the hole processing is not necessary and the production cost of the electronic apparatus 100 is low. Further, since the light-transmissive cover plate 1 has no holes in the ear piece, the strength of the light-transmissive cover plate 1 is maintained to be relatively high. Furthermore, in the present embodiment, since there are no holes of the ear piece on the surface of the electronic apparatus 100, problems of water or dust entering the holes of the ear piece are not generated. Therefore, since a water-proof structure or a dust-proof structure for solving the above-described problem becomes unnecessary in the electronic apparatus 100, further reduction in the cost of the electronic apparatus 100 can be realized.

Further, in the above-described example, a case of a mobile phone to which the present invention is applied is described as an example, but the present invention can be applied to an electronic apparatus other than the mobile phone. For example, the present invention can be applied to a game machine, a laptop computer, a portable navigation system, and the like. In addition, the present invention is not limited to the above-described embodiments, and various modifications and changes may be made in the range not departing from the scope of the present invention.

- 1: light-transmissive cover plate

- 1A: first surface
- 1B: second surface
- 50: control unit
- 52: image display device
- 52a: image display surface
- 53: touch panel
- 55: piezoelectric vibrating element
- 100: electronic apparatus

## Claims

1. An electronic apparatus, comprising:
an image display device that includes an image display surface;
a casing that houses at least a portion of periphery of the image display device;
a light-transmissive cover plate that includes a first surface facing the image display surface, at least a peripheral edge of the first surface is bonded to the casing; and
a joining member that bonds the peripheral edge of the first surface to the casing and has a Young's modulus smaller than that of the light-transmissive cover plate,
wherein the light-transmissive cover plate includes a gradual reduction area whose thickness is gradually reduced toward a most peripheral edge and at least a portion of the peripheral edge of the first surface is included in the gradual reduction area.

2. The electronic apparatus according to claim 1,
wherein the gradual reduction area whose thickness is gradually reduced with the peripheral edge of the first surface is gradually closed to the second surface of the light-transmissive cover plate toward to the most peripheral edge.

3. The electronic apparatus according to claim 1 or 2,
wherein the joining member is arranged such that the joining member continuously surrounds the peripheral edge of the first surface to at least a part of the most peripheral edge, and
wherein at least a part of the most peripheral edge is bonded to the casing 2 through the joining member.

4. The electronic apparatus according to any one of claims 1 to 3, wherein the light-transmissive cover plate is a single crystal body which has alumina (Al₂O₃) as a main component.

5. The electronic apparatus according to any one of claims 1 to 4, wherein a value of arithmetic average roughness of the gradual reduction area in the first surface is larger than the arithmetic average roughness of a central area that is positioned closer to the central side of the first surface than the gradual reduction area.

6. The electronic apparatus according to any one of claims 1 to 5, further comprising a piezoelectric vibrating element for transmitting a sound information to a user,
wherein the piezoelectric vibrating element provided on the light-transmissive cover member, and
wherein the piezoelectric vibrating element vibrates the light-transmissive cover member according to the sound information by vibrating based on a sound signal according to the sound information.

7. A light-transmissive cover plate, comprising:
a first surface, a second surface, a most peripheral edge, and a gradual reduction area whose thickness is gradually reduced toward the most peripheral edge.

8. The electronic apparatus according to claim 7,
wherein the gradual reduction area whose thickness is gradually reduced with the peripheral edge of the first surface is gradually closed to the second surface of the light-transmissive cover plate toward to the most peripheral edge.
